# EUROPEAN PATENT APPLICATION

(11) **EP 2 192 708 A2**
(43) Date of publication of application: **02.06.2010**
(21) Application number: 09011176.6
(22) Date of filing: 31.08.2009
(51) Int. Cl.: H04H 60/63, H04H 60/91

(54) **Mobile terminal and method of purchasing broadcast product therein**

(30) Priority: 28.11.2008 KR 20080119515
(71) Applicant: LG Electronics Inc., Seoul 150-010 (KR)
(72) Inventor: Hong, Seok, Min, Kumchon-gu Seoul, 153-801 (KR)
(74) Representative: Katérle, Axel

(57) **Abstract**

A mobile terminal including a wireless communication unit configured to receive broadcast content information, a display unit configured to display the received broadcast content information, an input unit configured to generate a selection signal indicating a selection of a broadcast product included in the displayed broadcast content information, a memory unit configured to store user-specific personal information, and a controller configured to extract broadcast product subscription information about the selected broadcast product from the broadcast content information, to extract user-specific personal purchase information for purchasing the broadcast product from the user-specific personal information stored in the memory unit of the mobile terminal, to create a message including the extracted broadcast product subscription information and the extracted user-specific personal information, and to control the wireless communication unit to transmit the created message using a messaging service to a server so as to make a request for a purchase of the selected broadcast product.

## Description

This application claims the benefit of the Korean Patent Application No. 10-2008-0119515, filed on November 28, 2008, which is hereby incorporated by reference as if fully set forth herein.

### BACKGROUND OF THE INVENTION

### Field of the Invention

The present invention relates to a mobile terminal and corresponding method for purchasing a broadcast product.

### Discussion of the Related Art

A terminal is a device that performs various functions. Examples of such functions include data and voice communications, capturing images and video via a camera, recording audio, playing music files via a speaker system, and displaying images and video on a display. Some terminals include additional functionality which supports game playing, while other terminals are configured as multimedia players.

More recently, terminals have been configured to receive broadcast and multicast signals which permit viewing of content such as videos and television programs. However, it is often difficult for a user to purchase a broadcast product using their terminal.

### SUMMARY OF THE INVENTION

Accordingly, the present invention is directed to a mobile terminal and method of purchasing a broadcast product therein that substantially obviates one or more problems due to the limitations and disadvantages of the related art.

Another object of the present invention is to provide a mobile terminal and method of purchasing a broadcast product using a messaging service.

To achieve these objects and other advantages and in accordance with the purpose of the invention, as embodied and broadly described herein, the present invention provides in one aspect a mobile terminal including a wireless communication unit configured to receive broadcast content information, a display unit configured to display the received broadcast content information, an input unit configured to generate a selection signal indicating a selection of a broadcast product included in the displayed broadcast content information, a memory unit configured to store user-specific personal information, and a controller configured to extract broadcast product subscription information about the selected broadcast product from the broadcast content information, to extract user-specific personal purchase information for purchasing the broadcast product from the user-specific personal information stored in the memory unit of the mobile terminal, to create a message including the extracted broadcast product subscription information and the extracted user-specific personal information, and to control the wireless communication unit to transmit the created message using a messaging service to a server so as to make a request for a purchase of the selected broadcast product.

In another aspect of the present invention, the present invention provides a method of controlling a mobile terminal, and which includes receiving broadcast content information, displaying the received broadcast content information, receiving a selection signal indicating a selection of a broadcast product included in the displayed broadcast content information, storing user-specific personal information, extracting broadcast product subscription information about the selected broadcast product from the broadcast content information, extracting user-specific personal purchase information for purchasing the broadcast product from the user-specific personal information stored in the memory unit of the mobile terminal, creating a message including the extracted broadcast product subscription information and the extracted user-specific personal information, and transmitting the created message using a messaging service to a server so as to make a request for a purchase of the selected broadcast product.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2A is a front perspective diagram of a mobile terminal according to one embodiment of the present invention;

FIG. 2B is a rear perspective diagram of a mobile terminal according to one embodiment of the present invention;

FIG. 3 is a diagram for explaining a concept of proximity depth of a proximity sensor;

FIGs. 4A and 4B are backside perspective diagrams of a mobile terminal according to one embodiment of the present invention, in which an identity device is detached/attached to/from the mobile terminal;

FIG. 5 is a flowchart illustrating a method of purchasing a broadcast product in a mobile terminal according to one embodiment of the present invention;

FIGs. 6 and 7 are diagrams of a screen configuration illustrating a process for selecting a broadcast product using a broadcast product list according to an embodiment of the present invention;

FIGs. 8A-9 are diagrams of a screen configuration illustrating a process for selecting a broadcast product using a broadcast channel list according to an embodiment of the present invention;

FIGs. 10A-11 are diagrams of a screen configuration illustrating a process for selecting a broadcast product using a broadcast program list according to an embodiment of the present invention;

FIGs. 12A-13 are diagrams of a screen configuration illustrating a process for selecting a broadcast product using a broadcast organization table according to an embodiment of the present invention;

FIGs. 14-16D are diagrams of a screen configuration illustrating a process for selecting a broadcast product if a broadcast viewing authority expires within a broadcast time according to an embodiment of the present invention;

FIGs. 17A-18B are diagrams of a screen configuration illustrating displaying a broadcast product purchase reservation and reservation announcement according to an embodiment of the present invention;

FIGs. 19A-20B are diagrams of a screen configuration illustrating a broadcast product purchase when a broadcast product free purchase authority is obtained according to an embodiment of the present invention;

FIG. 21 is a diagram of a screen configuration illustrating a format of a purchase request message according to an embodiment of the present invention;

FIGs. 22 and 23 are diagrams of a screen configuration illustrating a purchase request message configured according to the format shown in FIG. 21;

FIGs. 24-30 are diagrams of a screen configuration including information on a purchase recommendation, payment request, and purchase confirmation request for a broadcast product according to an embodiment of the present invention;

FIG. 31 is a diagram of a screen configuration illustrating displaying a purchase complete message according to an embodiment of the present invention;

FIGs. 32-33B are diagrams of a screen configuration illustrating displaying a broadcast product list according to an embodiment of the present invention; and

FIG. 34 is a diagram of a screen configuration illustrating inputting authentication information according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts. First, mobile terminals described in this disclosure can include a mobile phone, a smart phone, a laptop computer, a digital broadcast terminal, a PDA (personal digital assistants), a PMP (portable multimedia player), a navigation system and the like. Embodiments of the present invention may also be applicable to a stationary terminal.

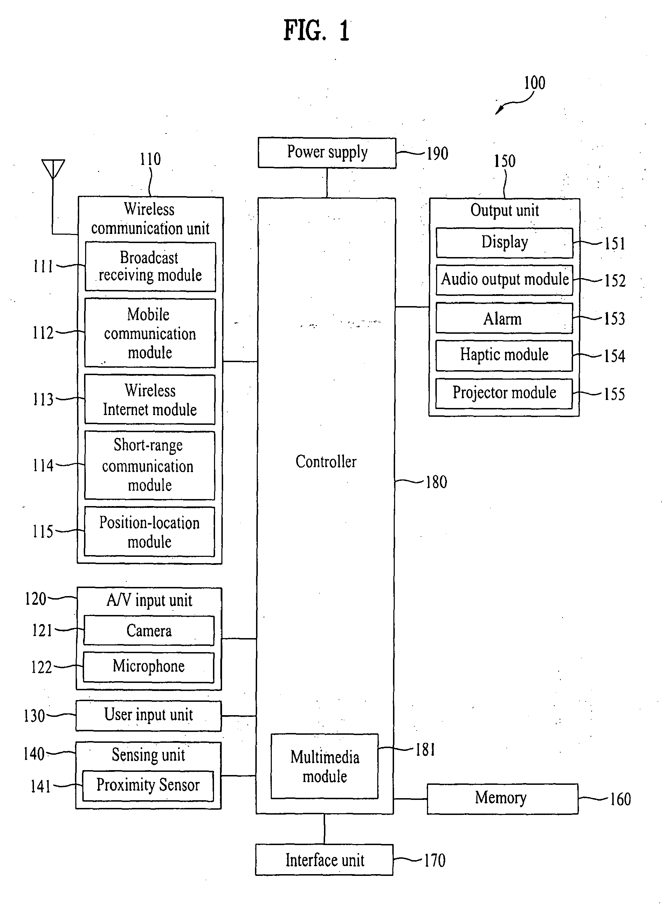

FIG. 1 is a block diagram of a mobile terminal 100 according to one embodiment of the present invention. Referring to FIG. 1, the mobile terminal 100 includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but implementing all of the illustrated components is not a requirement. Greater or fewer components may alternatively be implemented.

The wireless communication unit 110 includes one or more components which permits wireless communication between the mobile terminal 100 and a wireless communication system or network within which the mobile terminal 100 is located. For instance, in FIG. 1, the wireless communication unit 110 includes a broadcast receiving module 111, a mobile communication module 112, a wireless Internet module 113, a short-range communication module 114, a position-location module 115 and the like.

The broadcast receiving module 111 receives a broadcast signal and/or broadcast associated information from an external broadcast managing server via a broadcast channel. The broadcast channel may include a satellite channel and a terrestrial channel. Further, the broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. The broadcast signal may also include a broadcast signal combined with a TV or radio broadcast signal.

In addition, the broadcast associated information includes information associated with a broadcast channel, a broadcast program, a broadcast service provider, etc. Also, the broadcast associated information can be provided via a mobile communication network. In this instance, the broadcast associated information can be received by the mobile communication module 112. The broadcast associated information can also be implemented in various forms. For instance, broadcast associated information may include an electronic program guide (EPG) of the digital multimedia broadcasting (DMB) system and an electronic service guide (ESG) of the digital video broadcast-handheld (DVB-H)system.

Further, the broadcast receiving module 111 may be configured to receive broadcast signals transmitted from various types of broadcast systems. By a non-limiting example, such broadcasting systems include the digital multimedia broadcasting-terrestrial (DMB-T) system, the digital multimedia broadcasting-satellite (DMB-S) system, the digital video broadcast-handheld (DVB-H) system, the data broadcasting system known as media forward link only (MediaFLO®), and the integrated services digital broadcast-terrestrial (ISDB-T) system. Optionally, the broadcast receiving module 111 can be configured for other broadcasting systems as well as the above-explained digital broadcasting systems.

In addition, the broadcast signal and/or broadcast associated information received by the broadcast receiving module 111 may be stored in a suitable device such as the memory 160. Also, the mobile communication module 112 transmits/receives wireless signals to/from one or more network entities (e.g., a base station, external terminal, server, etc.). Such wireless signals may represent audio, video, and data according to text/multimedia message transceivings, among others. Further, the wireless Internet module 113 supports Internet access for the mobile terminal 100, and may be internally or externally coupled to the mobile terminal 100. In this instance, the wireless Internet technology can include WLAN (Wireless LAN) (Wi-Fi), Wibro (Wireless broadband), Wimax (World Interoperability for Microwave Access), HSDPA (High Speed Downlink Packet Access), etc. Also, the short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

In addition, the position-location module 115 identifies or otherwise obtains the location of the mobile terminal 100, and may be implemented with a global positioning system (GPS) module. Referring again to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. The processed image frames can also be displayed on a display 151 included in the output unit 150.

The image frames processed by the camera 121 can be stored in the memory 160 or can be externally transmitted via the wireless communication unit 110. Optionally, at least two cameras 121 can be provided to the mobile terminal 100. Further, the microphone 122 receives an external audio signal while the portable device is in a particular mode, such as a phone call mode, recording mode and voice recognition. This audio signal is then processed and converted into electric audio data. The processed audio data is also transformed into a format transmittable to a mobile communication base station via the mobile communication module 112 for a call mode. The microphone 122 may also include assorted noise removing algorithms to remove noise generated in the course of receiving the external audio signal.

In addition, the user input unit 130 generates input data responsive to user manipulation of an associated input device or devices. Examples of such devices include a keypad, a dome switch, a touchpad (e.g., static pressure/capacitance), a jog wheel, a jog switch, etc. Further, the sensing unit 140 provides sensing signals for controlling operations of the mobile terminal 100 using status measurements of various aspects of the mobile terminal 100. For instance, the sensing unit 140 may detect an open/close status of the mobile terminal 100, a relative positioning of components (e.g., a display and keypad) of the mobile terminal 100, a change of position of the mobile terminal 100 or a component of the mobile terminal 100, a presence or absence of user contact with the mobile terminal 100, an orientation or acceleradon/deceleration of the mobile terminal 100, etc.

As an example, when the mobile terminal 100 is a slide-type mobile terminal, the sensing unit 140 can sense whether a sliding portion of the mobile terminal is opened or closed. Other examples include the sensing unit 140 sensing the presence or absence of power provided by the power supply 190, the presence or absence of a coupling or other connection between the interface unit 170 and an external device. In FIG. 1, the sensing unit 140 also includes a proximity sensor 141. Further, the output unit 150 generates outputs relevant to the senses of sight, hearing, touch and the like. The output unit 150 also includes the display 151, an audio output module 152, an alarm 153, a haptic module 154, a projector module 155 and the like.

In addition, the display 151 is implemented to visually display or output information associated with the mobile terminal 100. For instance, if the mobile terminal is operating in a phone call mode, the display will generally provide a user interface (UI) or graphical user interface (GUI), which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may also be implemented using display technologies including, for example, a liquid crystal display (LCD), a thin film transistor-liquid crystal display (TFT-LCD), an organic light-emitting diode display-(OLED), a flexible display and a three-dimensional display. The mobile terminal 100 may include one or more of such displays. Some of the above displays can be implemented in a transparent or optical transmittive type and are referred to as a transparent display. A TOLED (transparent OLED) is a representative example for the transparent display. A rear configuration of the display 151 can be implemented in the optical transmittive type as well. In this configuration, a user is able to see an object in rear of a terminal body via the area occupied by the display 151 of the terminal body.

At least two displays 151 can also be provided to the mobile terminal 100. For instance, a plurality of displays can be arranged on a single face of the mobile terminals 100 in a manner of being spaced apart from each other or being built in one body. Alternatively, a plurality of displays can be arranged on different faces of the mobile terminal 100. When the display 151 and a sensor for detecting a touch action (hereinafter called 'touch sensor') configures a mutual layer structure (hereinafter called 'touchscreen'), the display 151 can be used as an input device as well as an output device. In this instance, the touch sensor can be configured as a touch film, a touch sheet, a touchpad or the like.

The touch sensor can also be configured to convert a pressure applied to a specific portion of the display 151 or a variation of a capacitance generated from a specific portion of the display 151 to an electric input signal. Moreover, the touch sensor can detect a pressure of a touch as well as a touched position or size. If a touch input is made to the touch sensor, signal(s) corresponding to the touch is transferred to a touch controller. The touch controller then processes the signal(s) and transfers the processed signal(s) to the controller 180. Therefore, the controller 180 is able to know whether a prescribed portion of the display 151 is touched.

In addition, the proximity sensor 141 in FIG. 1 can be provided to an internal area of the mobile terminal 100 enclosed by the touchscreen or around the touchscreen. The proximity sensor 141 is also a sensor that detects a presence or non-presence of an object approaching a prescribed detecting surface or an object existing around the proximity sensor using an electromagnetic field strength or infrared ray without mechanical contact. Hence, the proximity sensor 141 has a durability longer than that of a contact type sensor and also has a utility wider than that of the contact type sensor.

The proximity sensor 141 can also include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. When the touchscreen includes the electrostatic capacity proximity sensor, the sensor 141 can detect the proximity of a pointer using a variation of electric field according to the proximity of the pointer. In this instance, the touchscreen (touch sensor) can be classified as the proximity sensor.

In the following description, an action that a pointer approaches without contacting the touchscreen to be recognized as located on the touchscreen is named 'proximity touch'. Also, an action that a pointer actually touches the touchscreen is named 'contact touch'. The meaning of the position on the touchscreen proximity-touched by the pointer means the position of the pointer which vertically opposes the touchscreen when the pointer performs the proximity touch. Further, the proximity sensor 141 detects a proximity touch and a proximity touch pattern (e.g., a proximity touch distance, a proximity touch duration, a proximity touch position, a proximity touch shift state, etc.). Also, information corresponding to the detected proximity touch action and the detected proximity touch pattern can be output to the touchscreen.

In addition, the audio output module 152 functions in various modes including a call-receiving mode, a call-placing mode, a recording mode, a voice recognition mode, a broadcast reception mode and the like to output audio data received from the wireless communication unit 110 or is stored in the memory 160. During operation, the audio output module 152 outputs audio relating to a particular function (e.g., a call received, message received, etc.). The audio output module 152 can also be implemented using one or more speakers, buzzers, other audio producing devices, and combinations thereof.

Further, the alarm 153 outputs a signal for announcing the occurrence of a particular event associated with the mobile terminal 100. Typical events include a call received, a message received and a touch input received. The alarm 153 can also output a signal for announcing the event occurrence by using a vibration as well as video or audio signals. The video or audio signals can also be output via the display 151 or the audio output unit 152. Hence, the display 151 or the audio output module 152 can be regarded as a part of the alarm 153.

In addition, the haptic module 154 generates various tactile effects that can be sensed by a user. Vibration is a representative example of the tactile effects generated by the haptic module 154. A strength and pattern of the vibration generated by the haptic module 154 are also controllable. For instance, different vibrations can be output in a manner of being synthesized together or can be output in sequence. The haptic module 154 can also generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of a hold/cold sense using an endothermic or exothermic device and the like. The haptic module 154 can also be implemented to enable a user to sense the tactile effect through a muscle sense of finger, arm or the like as well as to transfer the tactile effect through a direct contact. Optionally, at least two haptic modules 154 can be provided to the mobile terminal 100.

The projector module 155 performs an image projector function using the mobile terminal 100. That is, the projector module 155 is able to display an image, which is identical or similar to the image displayed on the display 151, on an external screen or wall according to a control signal of the controller 180. In particular, the projector module 155 can include a light source generating light (e.g., laser) for projecting an image externally, an image producing module for producing an image using the light generated from the light source, and a lens for enlarging and outputting the image externally in a predetermined focus distance. The projector module 155 can also include a device for adjusting an image projected direction by mechanically moving the lens or the entire module 155.

The projector module 155 can also be classified into a CRT (cathode ray tube) module, an LCD (liquid crystal display) module, a DLP (digital light processing) module or the like according to the device type of a display. In particular, the DLP module is operated by the mechanism of enabling the light generated from the light source to reflect on a DMD (digital micro-mirror device) chip and can be advantageous for downsizing the projector module 151. Preferably, the projector module 155 can be provided in a length direction of the lateral, front or backside direction of the mobile terminal 100. Also, the projector module 155 can be provided to any portion of the mobile terminal 100.

In addition, the memory 160 is used to store various types of data to support the processing, control, and storage requirements of the mobile terminal 100. Examples of such data include program instructions for applications operating on the mobile terminal 100, contact data, phonebook data, messages, audio, still pictures, moving pictures, etc. Also, a recent use history or a cumulative use frequency of each data (e.g., use frequency for each phonebook, each message or each multimedia) can be stored in the memory 160. Moreover, data for various patterns of vibration and/or sound output for a touch input to the touchscreen can be stored in the memory 160.

The memory 160 may also be implemented using any type or combination of suitable volatile and non-volatile memory or storage devices including a hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. The mobile terminal 100 can also operate in association with a web storage for performing a storage function of the memory 160 on the Internet.

Further, the interface unit 170 is used to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may also be configured using a wired/wireless headset port, an external charger port, a wired/wireless data port, a memory card port, a port for coupling to a device having an identity module, audio input/output ports, video input/output ports, an earphone port and/or the like.

In addition, the identity module is a chip for storing various kinds of information for authenticating a use authority of the mobile terminal 100 and can include a User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device can be connected to the mobile terminal 100 via the corresponding port.

Also, when the mobile terminal 100 is connected to an external cradle, the interface unit 170 becomes a passage for supplying the mobile terminal 100 with power from the cradle or a passage for delivering various command signals input from the cradle by a user to the mobile terminal 100. Each of the various command signals input from the cradle or the power can operate as a signal enabling the mobile terminal 100 to recognize that it is correctly , loaded in the cradle.

In addition, the controller 180 controls the overall operations of the mobile terminal 100. For example, the controller 180 performs the control and processing associated with voice calls, data communications, video calls, etc. In FIG. 1, the controller 180 includes a multimedia module 181 that provides multimedia playback. The multimedia module 181 may also be configured as part of the controller 180, or implemented as a separate component. Moreover, the controller 180 is able to perform a pattern recognizing process for recognizing a writing input and a picture drawing input performed on the touchscreen as characters or images, respectively. Further, the power supply unit 190 provides power required by the various components for the mobile terminal 100. The power may be internal power, external power, or combinations thereof.

In addition, the various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

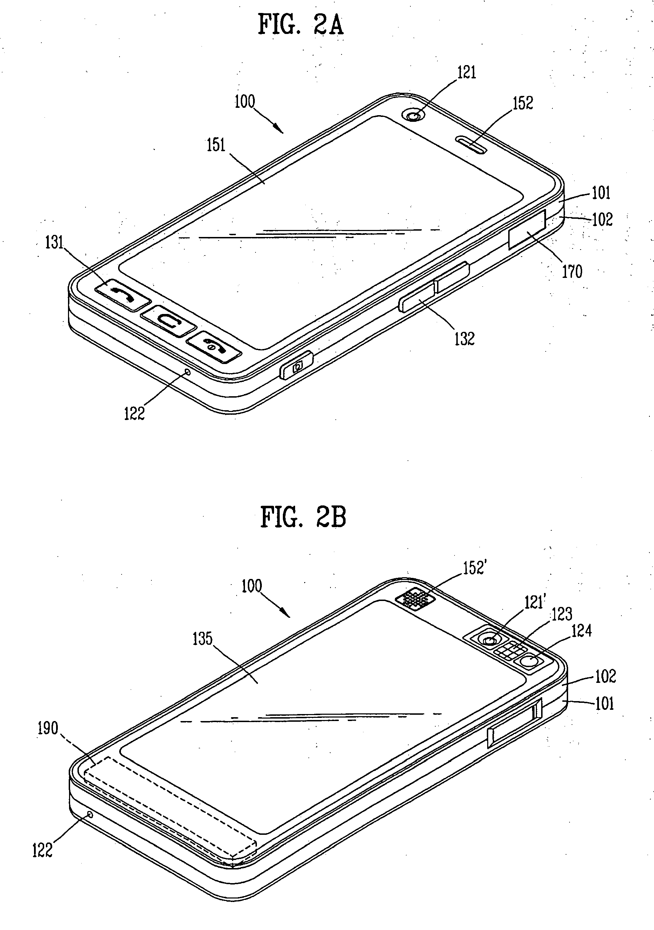

Next, FIG. 2A is a front perspective diagram of the mobile terminal 100 according to one embodiment of the present invention. The mobile terminal 100 shown in the drawing has a bar type terminal body. However, the mobile terminal 100 may be implemented in a variety of different configurations. Examples of such configurations include a folder-type, slide-type, rotational-type, swing-type and combinations thereof. The following disclosure refers to a bar-type mobile terminal 100. However, such teachings apply to other types of mobile terminals.

Referring to FIG. 2A, the mobile terminal 100 includes a case (casing, housing, cover, etc.) configuring an exterior thereof. In the present embodiment, the case is divided into a front case 101 and a rear case 102. Various electric/electronic parts are also loaded in a space provided between the front and rear cases 101 and 102. Optionally, at least one middle case can be further provided between the front and rear cases 101 and 102. Also, the cases 101 and 102 can be formed by injection molding of synthetic resin or can be formed of a metal substance such as stainless steel (STS), titanium (Ti) or the like for example. As shown in FIG. 2A, the display 151, the audio output unit 152, the camera 121, user input units 131 and 132 of the user input unit 130, the microphone 122, the interface 170 and the like are provided to the terminal body, and more particularly, to the front case 101.

Further, in this embodiment, the display 151 occupies most of a main face of the front case 101. Also, the audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 are also provided to lateral sides of the front and rear cases 101 and 102. In addition, the input unit 130 is manipulated to receive a command for controlling an operation of the terminal 100. In FIG. 2, the input unit 130 includes the manipulating units 131 and 132.

The manipulating units 131 and 132 can also be named a manipulating portion and may adopt any mechanism of a tactile manner that enables a user to perform a manipulation action by experiencing a tactile feeling. Also, content input by the first or second manipulating unit 131 or 132 can be diversely set. For instance, such a command as start, end, scroll and the like can be input to the first manipulating unit 131. In addition, a command for a volume adjustment of sound output from the audio output unit 152, a command for a switching to a touch recognizing mode of the display 151 or the like can be input to the second manipulating unit 132.

Next, FIG. 2B is a perspective diagram of a backside of the terminal shown in FIG. 2A. Referring to FIG. 2B, a camera 121' is provided to a backside of the terminal body, and more particularly, to the rear case 102. The camera 121' also has a photographing direction that is substantially opposite to the camera 121 shown in FIG. 2A and may have pixels differing from those of the camera 121.

Preferably, for instance, the camera 121 has low pixels enough to capture and transmit a picture of a user's face for a video call, while the camera 121' has high pixels for capturing a general subject for photography without transmitting the captured subject. Each of the cameras 121 and 121' can also be installed at the terminal body to be rotated or popped up. In addition, a flash 123 and a mirror 124 are provided adjacent to the camera 121'. In particular, the flash 123 projects light toward a subject when photographing the subject using the camera 121'. In addition, when a user attempts to take a picture of the user (self-photography) using the camera 121', the mirror 124 enables the user to view their face reflected by the mirror 124.

An additional audio output unit 152' is also provided to the backside of the terminal body. Thus, the audio output unit 152' can implement a stereo function together with the audio output unit 152 shown in FIG. 2A and may also be used for implementation of a speakerphone mode in the terminal. In addition, a broadcast signal receiving antenna 124 is provided to the lateral side of the terminal body as well as an antenna for communication or the like. The antenna 124 constructing a portion of the broadcast receiving module 111 shown in FIG. 1 can also be retractably provided to the terminal body.

Also, the power supply unit 190 for supplying power to the terminal 100 is provided to the terminal body, and can be configured to be built within the terminal body. Alternatively, the power supply unit 190 can be configured to be detachably connected to the terminal body. A touchpad 135 for detecting a touch is also provided to the rear case 102. The touchpad 135 can be configured in a light transmittive type like the display 151. In this instance, if the display 151 is configured to output visual information from its both faces, it is possible to recognize the visual information via the touchpad 135 as well. Further, the information output from both of the faces can be entirely controlled by the touchpad 135. Alternatively, a display can be provided to the touchpad 135 so that a touchscreen can be provided to the rear case 102 as well. In addition, the touchpad 135 is activated by interconnecting with the display 151 of the front case 101. The touchpad 135 can also be provided in rear of the display 151 in parallel, and can have a size equal to or smaller than that of the display 151.

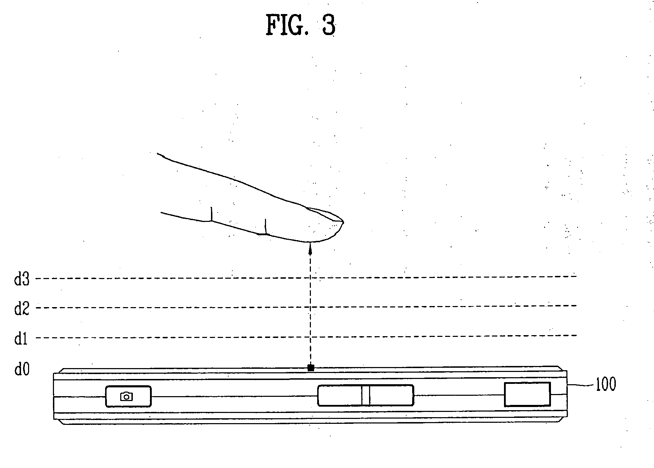

The proximity sensor 141 described with reference to FIG. 1 will now be explained explained in detail with reference to FIG. 3. In more detail, FIG. 3 is a diagram for explaining a proximity depth of a proximity sensor. Referring to FIG. 3, when such a pointer as a user's finger, a pen and the like approaches the touchscreen, the proximity sensor 141 provided within or in the vicinity of the touchscreen detects the approach of the pointer and then outputs a proximity signal. Further, the proximity sensor 141 can be configured to output a different proximity signal according to a distance between the pointer and the proximity-touched touchscreen (hereinafter named 'proximity depth).

FIG. 3 shows a cross-section of the touchscreen provided with a proximity sensor capable of distinguishing three proximity depths, for example. However, a proximity sensor capable of distinguishing proximity depths smaller than 3 or equal to or greater than 4 is also possible. Thus, as shown in FIG. 3, when the pointer is fully contacted with the touchscreen (d0), it is recognized as a contact touch. When the pointer is located to be spaced apart from the touchscreen in a distance smaller than d1, it is recognized as a proximity touch to a first proximity depth, and when the pointer is located to be spaced apart from the touchscreen in a distance between d1 and d2, it is recognized as a proximity touch to a second proximity depth.

Also, when the pointer is located to be spaced apart from the touchscreen in a distance smaller than d3 or equal to or greater than d2, it is recognized as a proximity touch to a third proximity depth, and when the pointer is located to be spaced apart from the touchscreen in a distance equal to or greater than d3, it is recognized as a proximity touch as being released. Thus, the controller 180 can recognize the proximity touch as one of various input signals according to the proximity depth and position of the pointer. The controller 180 is also able to perform various operation controls according to the various input signals.

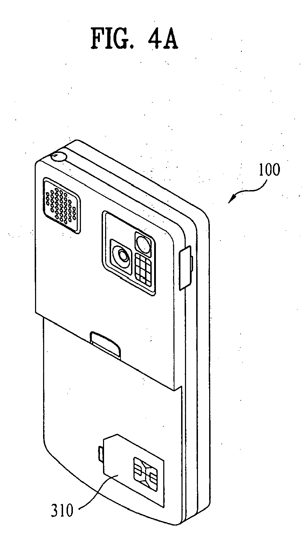

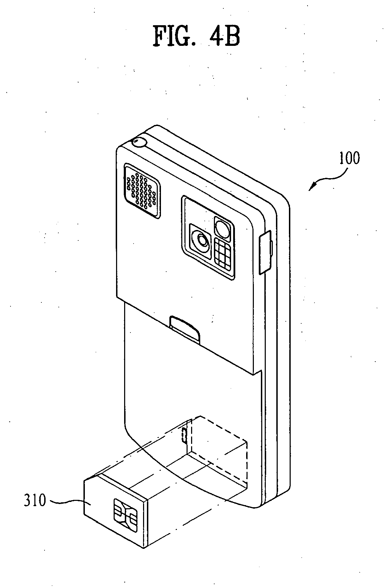

Next, FIGs. 4A and 4B are backside perspective diagrams of a mobile terminal according to one embodiment of the present invention, in which an identity device is detached/attached to/from the mobile terminal. Further, the identity device can include a SIM card, for example. Referring to FIGs. 4A and 4B, an identity device 310 is detachably provided from the terminal 100. Therefore, an old identity device can be replaced by a new identity device and loaded in the terminal 100. Also, the identity device 310 can be loaded in the terminal 100 by being combined with the interface unit 170. Alternatively, the identity device 310 can be loaded in the terminal 100 by being connected to a connector separately provided for the assembly to the identity device 310. In addition, a connecting unit for connecting the identity device 310 to the terminal 100 can be provided to any place of the terminal such as a backside, a lateral side, a front side and the like.

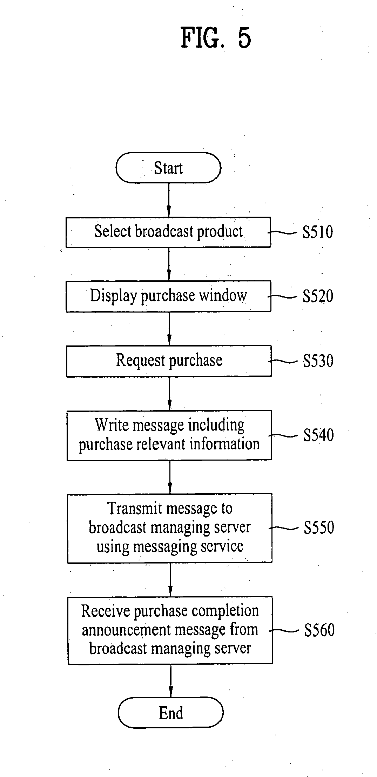

Next, FIG. 5 is a flowchart illustrating a method of purchasing a broadcast product in a mobile terminal according to one embodiment of the present invention. FIG. 1 will also be referred to throughout the rest of the description. Referring to FIG. 5, the mobile terminal 100 receives a selection for purchasing a broadcast product from an external source via the user input unit 130 (S510).

In particular, a user is able to input a selection action to purchase a broadcast product from at least one or more broadcast products using the user input unit 130. The mobile terminal 100 is then able to receive a broadcast product corresponding to the input selection action. Further, the broadcast product may mean a broadcast channel or program viewable using the terminal if a viewing authority exists in the terminal. Representatively, the broadcast product can mean a pay broadcast channel or a pay broadcast program of which viewing authority is obtainable according to a completion of payment of a prescribed amount.

For instance, a broadcast product can include at least one broadcast program or at least one broadcast channel. Also, a predetermined actual viewing period (e.g., 1 hour, 10 hours, a day, etc.) or a predetermined viewable period {e.g., between a first timing point (November 1, 2008) and a second timing point (November 10, 2008)} can be set for the broadcast program or channel constructing the broadcast product.

The selecting step S510 can be performed in various situations such as when a broadcast product purchase procedure is performed, when a broadcast channel list/broadcast program list/broadcast organization table is displayed, or when a broadcast viewing authority expires in the course of viewing a broadcast. In addition, prior to performing the selecting step S510, the mobile terminal 100 can receive information relevant to a broadcast channel and a broadcast program (hereinafter referred to as 'broadcast relevant information) (e.g., broadcast channel/broadcast program name, broadcast time/synopsis/performer information per broadcast program, purchase information per broadcast channel/broadcast program, etc.) using the wireless communication unit 110. In particular, the broadcast relevant information can be provided in the form of an electronic program guide (EPG), an electronic service guide (ESG), a service guide (SG) or the like.

Also, the broadcast relevant information can be periodically or randomly received using the wireless communication 110 or can be stored in the memory 160. Further, the controller 180 can update the broadcast relevant information previously stored in the memory 160 if a valid period of the previously stored broadcast relevant information expires or when new broadcast relevant information is received. Therefore, in order to facilitate a user to select a broadcast product, the controller 180 extracts purchase information per broadcast channel/broadcast program (e.g., identification information such as a broadcast service provider name and the like, broadcast channel/broadcast program name, amount information, etc.) from the broadcast relevant information stored in the memory 160 and then provides the extracted information to a user via the display 151. Subsequently, the mobile terminal 100 displays a purchase window for purchasing the broadcast product selected in the selecting step S510 via the display 151 (S520). Also, in the purchase window, the purchase information relevant to the selected broadcast product can be included.

As mentioned in the above description, the controller 180 can extract the purchase information relevant for the selected broadcast product from the broadcast relevant information stored in the memory 160 and then display the extracted purchase information via the purchase window. In addition, the identity device 310 can manage the information relevant to the broadcast product (purchase information included). For example, if a request signal for providing the purchase information on the selected broadcast product is received, the identity device 310 provides the purchase information of the selected broadcast product to the controller 180 in order to enable the provided purchase information to be displayed via the purchase window. The above-described selecting and displays steps S510 and S520 can also be performed prior to or when outputting a broadcast program.

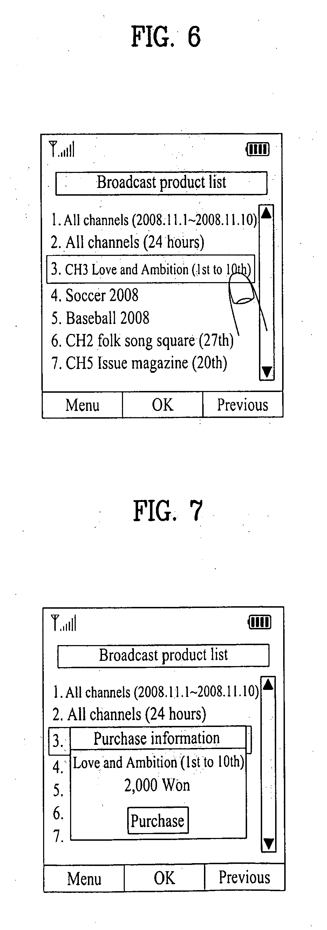

Next, in the following description, the selecting and displaying steps S510 and S520 performed in various instances are explained in more detail with reference to the accompanying drawings. In particular, FIGs. 6 and 7 are diagrams of a screen configuration illustrating a process for selecting a broadcast product using a broadcast product list according to an embodiment of the present invention.

Referring to FIGs. 6 and 7, when a menu item corresponding to a broadcast product purchase function is selected via a menu search (e.g., selecting a key separately designated to enable a broadcast product purchase function to be selected), the mobile terminal 100 displays a broadcast product list included at least one or more broadcast products, which at least one of can be purchased using the mobile terminal 100. Then, if a specific broadcast product is selected from the broadcast product list as shown in FIG. 6, the mobile terminal 100 displays a purchase window for purchasing the selected specific broadcast product (FIG. 7).

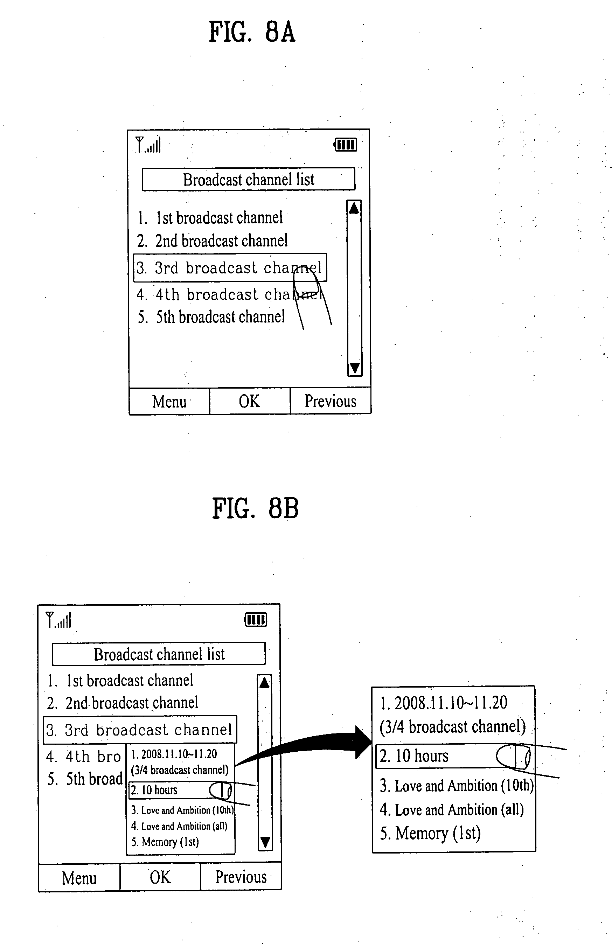

Next, FIGs. 8A-9 are diagrams of a screen configuration illustrating a process for selecting a broadcast product using a broadcast channel list according to an embodiment of the present invention. Referring to FIGs. 8A-9, when a menu item corresponding to a channel list view function is selected via a menu search (e.g., selecting a key separately designated to a broadcast list view function), the mobile terminal 100 displays a broadcast channel list including at least one or more broadcast channels (FIG. 8A).

In the broadcast channel list, a previously purchased broadcast channel, a free (common) broadcast channel, a non-purchased broadcast channel and the like can be included. In particular, a broadcast channel associated with a specific broadcast product can be distinctively displayed on the broadcast channel list. For instance, the broadcast channel associated with the specific broadcast product can be distinctively displayed using a shading adjustment, highlight effect, display region setup effect, blinking effect and/or the like. Then, if a broadcast channel associated with a specific broadcast product is selected from a broadcast channel list shown in FIG. 8A, the mobile terminal 100 displays a broadcast product list including at least one broadcast product associated with the selected broadcast channel (FIG. 8B).

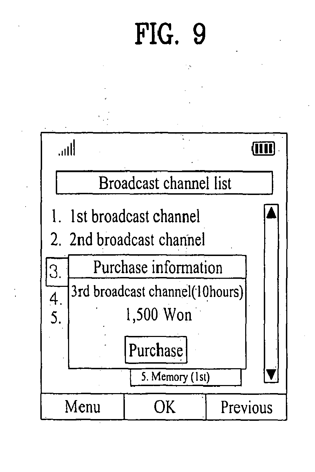

For instance, assuming that the third broadcast channel is selected in FIG. 8A, the third broadcast channel set for a predetermined viewable period (e.g., from November 10, 2008 to November 20, 2008), the third broadcast channel set for a predetermined actual viewing period (e.g., 10 hours), a specific broadcast program provided on the third broadcast channel and the like can be included in broadcast products associated with the third broadcast channel as shown in FIG. 8B. If a specific broadcast product is selected from the broadcast product list shown in FIG. 8B, the mobile terminal 100 displays a purchase window for purchasing the selected specific broadcast product (FIG. 9).

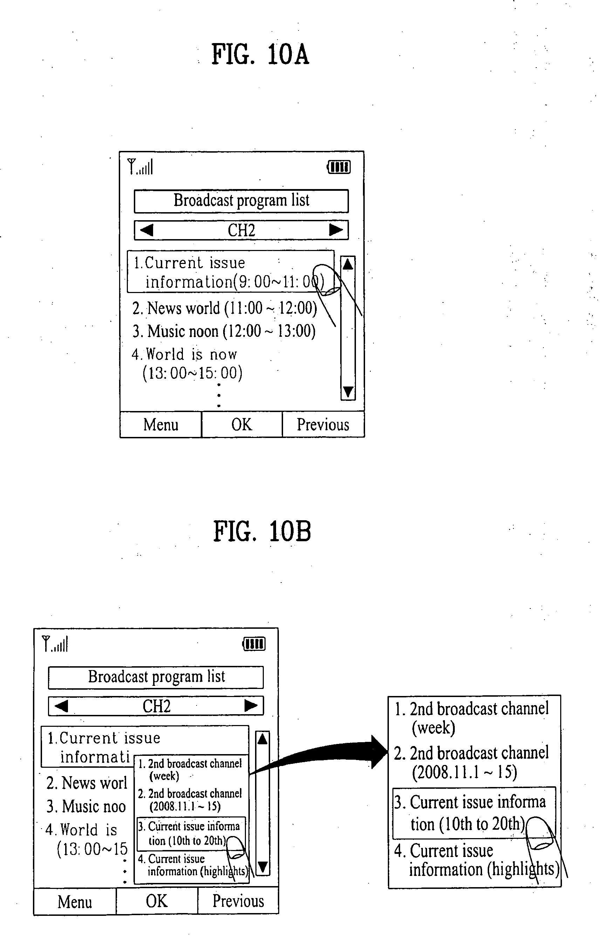

Next, FIGs. 10A-11 are diagrams of a screen configuration to explain a process for selecting a broadcast product using a broadcast program list according to an embodiment of the present invention. Referring to FIGs. 10A-11, if a menu item corresponding to a broadcast program list viewing function is selected via a menu search (or a key separately designated to a broadcast program list viewing function), the mobile terminal 100 displays a broadcast program list including at least one or more broadcast programs (FIG. 10A).

In the broadcast program list, a previously purchased broadcast program, a free (common) broadcast program, a non-purchased broadcast program and the like can be included. Further, a broadcast program associated with a specific broadcast product can be distinctively displayed on the broadcast program list. For instance, the broadcast program associated with the specific broadcast product can be distinctively displayed using a shading adjustment, highlight effect, display region setup effect, blinking effect and/or the like. If a broadcast program associated with a specific broadcast product is selected from a broadcast program list as shown in FIG. 10A, the mobile terminal 100 displays a list including at least one broadcast product associated with the selected broadcast program (FIG. 10B).

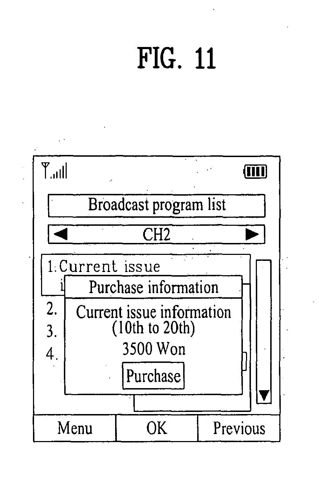

For instance, assuming that the 'current issue information' provided on the second broadcast channel CH2 is selected as shown in FIG. 10A, the second broadcast channel CH2 set for a predetermined actual viewing period (e.g., a week), the second broadcast channel CH2 set for a predetermined viewable period (e.g., from November 1, 2008 to November 15, 2008), a volume of predetermined installments of 'current issue information' (e.g., 1^{st} to 20^{th}), highlights of 'current issue information' and the like can be included in the broadcast products provided on the second broadcast channel CH2 as shown in FIG. 10B. If a specific broadcast product is selected from the broadcast product list shown in FIG. 10B, the mobile terminal 100 displays a purchase window for purchasing the selected specific broadcast product (FIG. 11).

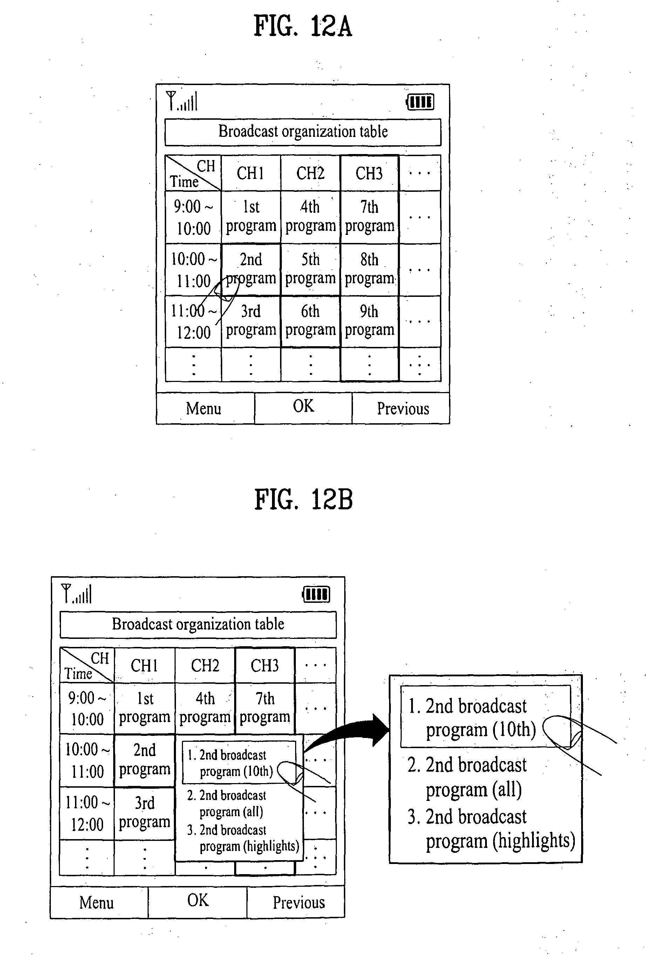

Next, FIGs. 12A-13 are diagrams of a screen configuration illustrating a process for selecting a broadcast product using a broadcast organization table according to an embodiment of the present invention. Referring to FIGs. 12A-13, if a menu item corresponding to a broadcast organization table viewing function is selected via a menu search (or a key separately designated to a broadcast organization table viewing function is selected), the mobile terminal 100 displays a broadcast organization table (FIG. 12A).

In the broadcast organization table, organization information of a broadcast program per time can be included per broadcast channel. In particular, a broadcast channel or program associated with a specific broadcast product can be distinctively displayed on the broadcast organization table. For instance, the broadcast channel or program associated with the specific broadcast product can be distinctively displayed using a shading adjustment, highlight effect, display region setup effect, blinking effect and/or the like.

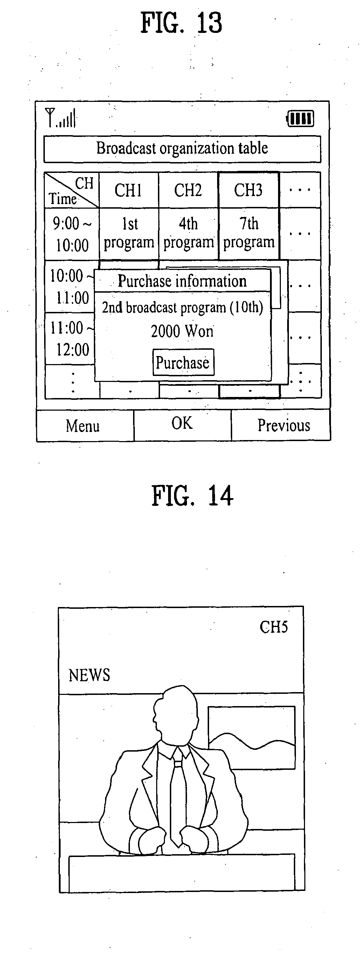

If a broadcast program or a broadcast channel associated with a specific broadcast product is selected from a broadcast organization table as shown in FIG. 12A, the mobile terminal 100 displays a broadcast product list including at least one broadcast product associated with the selected broadcast program or the selected broadcast channel (FIG. 12B). If a specific broadcast product is selected from the broadcast product list as shown in FIG. 12B, the mobile terminal 100 displays a purchase window for purchasing the selected specific broadcast product (FIG. 13).

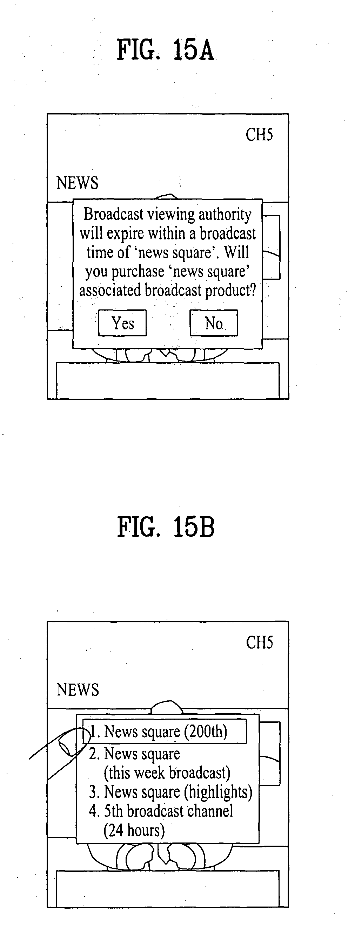

FIGs. 14-16D are diagrams of a screen illustrating a process for selecting a broadcast product if a broadcast viewing authority expires within a broadcast time according to an embodiment the present invention. Referring to FIGs. 14-16D, the mobile terminal 100 determines whether a broadcast viewing authority expires within a broadcast time of a currently output broadcast program (FIG. 14). If the broadcast viewing authority expires as a result of the determination, the mobile terminal 100 announces that the broadcast viewing authority is going to expire within a predetermined time from a timing point of a broadcast viewing authority expiration (at a prescribed timing point before the broadcast viewing authority expiration) while maintaining the broadcast output, and outputs a message for enabling a user to select whether to purchase a broadcast product associated with a currently outputted broadcast program (FIG. 15A).

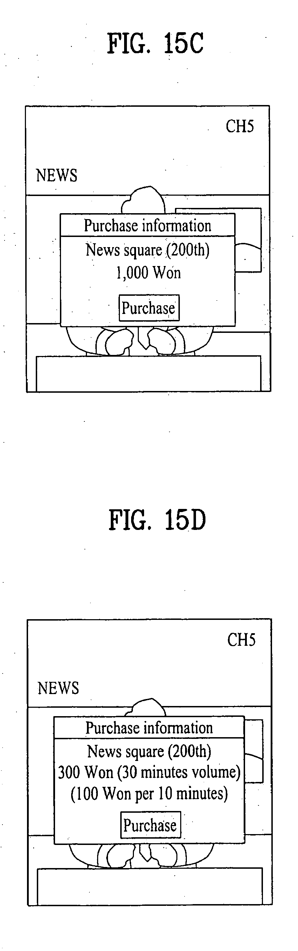

If a broadcast product purchase ('yes') is selected in FIG. 15A, the mobile terminal 100 displays a broadcast product list including at least one broadcast product associated with the currently output broadcast program while maintaining the broadcast output (FIG. 15B). If a specific broadcast product is selected from the broadcast product list shown in FIG. 15B, the mobile terminal 100 displays a purchase window for purchasing the selected specific broadcast product while maintaining the broadcast output (FIG. 15C).

Moreover, a purchase amount of a broadcast product may vary according to a time ('non-viewable time') from the expiratory timing point of the broadcast viewing authority to an expiratory timing point of a currently outputted broadcast program. Hence, a purchase amount of the selected broadcast program can be set in proportion to a non-viewable time (FIG. 15D). Alternatively, if a purchase amount per non-viewable time is set in advance, a purchase amount corresponding to a non-viewable time of a currently output broadcast program can be set.

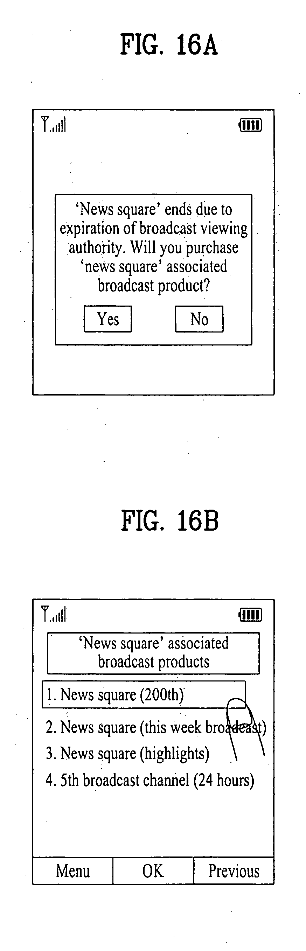

Meanwhile, if the broadcast viewing authority expires as a result of the determination, the mobile terminal 100 announces that the currently broadcast program will end due to the expiration of the broadcast viewing authority at a timing point of the expiration of the broadcast viewing authority or within a predetermined period from the timing point of the expiration of the broadcast viewing authority, and outputs a text message for enabling a user to select whether to purchase a broadcast product associated with the ended broadcast program (FIG. 16A).

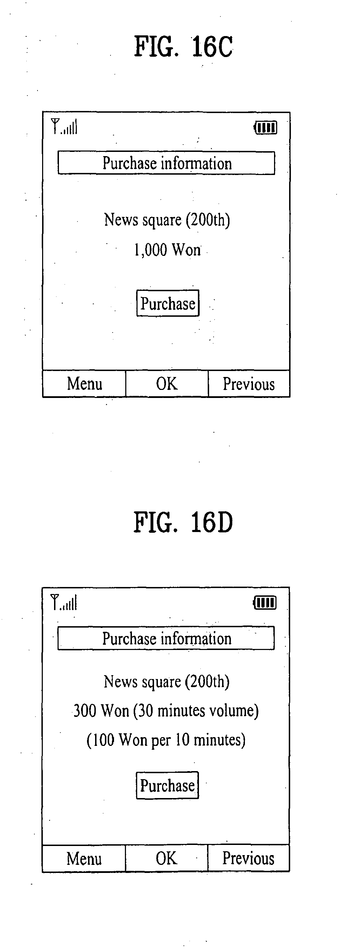

If a broadcast product purchase ('yes') is selected in FIG. 16A, the mobile terminal 100 displays a broadcast product list including at least one broadcast product associated with the ended broadcast program (FIG. 16B). If a specific broadcast product is selected from the broadcast product list shown in FIG. 16B, the mobile terminal 100 displays a purchase window for purchasing the selected specific broadcast product (FIG. 16C).

Moreover, a purchase amount of a broadcast product may vary according to a non-viewable time of the ended broadcast program due to an expiration of the broadcast viewing authority. Hence, a purchase amount of the selected broadcast program can be set in proportion to a non-viewable time (FIG. 16D). Alternatively, if a purchase amount per non-viewable time is set in advance, a purchase amount corresponding to a non-viewable time of the ended broadcast program can be set.

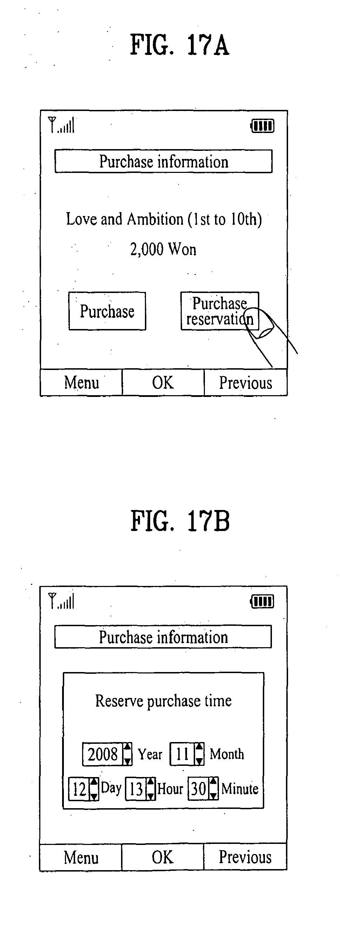

Also, a plurality of broadcast products can be selected from the broadcast product list shown in FIG. 15B or FIG. 16B. Moreover, after a user has selected a broadcast product to purchase, a purchase for the selected broadcast product can be requested or reserved according to a selection made by the user. This will now be explained in more detail with reference to FIGs. 17A - 18B. First, the mobile terminal 100 displays a purchase request region ('purchase') and a purchase reservation region ('purchase reservation') on prescribed portions of a purchase window for a specific broadcast product via the display 151 (FIG. 17A).

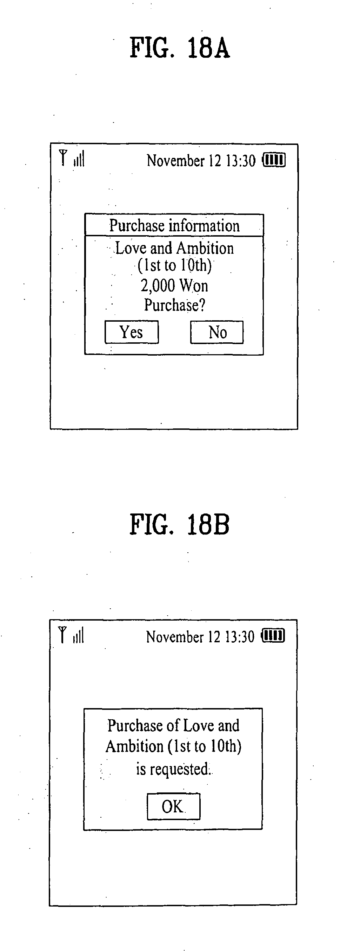

If the 'purchase reservation' region is activated in FIG. 17A, the mobile terminal 100 sets a purchase reservation timing point (or time) for the specific broadcast product according to a user operation via the user input unit 130 (FIG. 17B). If the purchase reservation timing point set in FIG. 17B arrives, the mobile terminal 100 displays a purchase window to enable a user to select whether to purchase the specific broadcast product (FIG. 18A) or makes a request for a purchase of the specific broadcast product having a purchase reservation made thereto as well as informs the user that the purchase for the specific broadcast product has been requested, under the control of the controller 180 (FIG. 18B).

Further, in another embodiment, the controller 180 displays a purchase request confirmation prompt requesting confirmation the broadcast program is to be purchased a predetermined amount of time before the broadcast program is scheduled to start and before the wireless communication unit 110 transmits the created message to the server. That is, the message requesting purchase of the broadcast product is not transmitted until right before the program starts (e.g., five minutes before, ten minutes before, etc.), and instead the user is prompted to make sure they still want to purchase program.

In addition, the mobile terminal 100 can acquire a free purchase authority or a discount authority for a broadcast product from an external server via the wireless communication unit 110. In this instance, the external server may be a web server or another type of external server. Also, the mobile terminal 100 can acquire a free purchase authority or a discount authority from the external terminal.

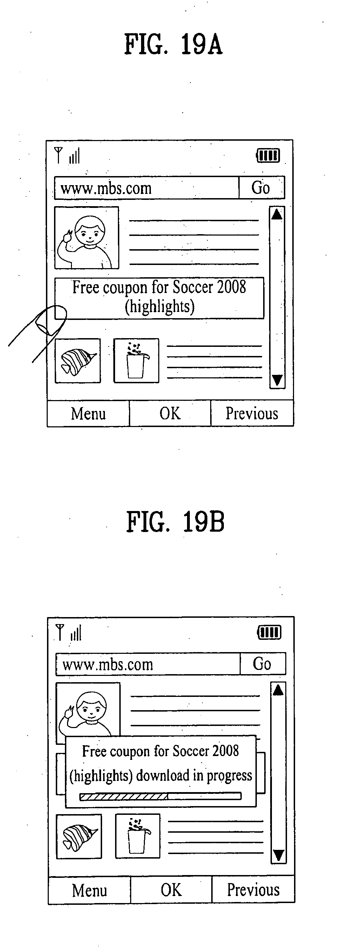

This will now be is explained in more detail with reference to FIGs. 19A-20B. That is, the mobile terminal 100 access a web server via the wireless communication unit 110, and more particularly, via the wireless Internet module 113 and displays a webpage provided by the accessed web server via the display 151 (FIG. 19A). If a user selects a free coupon for a specific broadcast product 'soccer 2008 (highlights)' provided via the displayed webpage shown in FIG. 19A, the mobile terminal 100 downloads the free coupon for 'soccer 2008 (highlights)' (FIG. 19B). The mobile terminal 100 also displays a download process on a screen or performs the download process as a background process. Having downloaded the free coupon for 'soccer 2008 (highlights)', the mobile terminal 100 acquires a free purchase authority for the 'soccer 2008 (highlights)'.

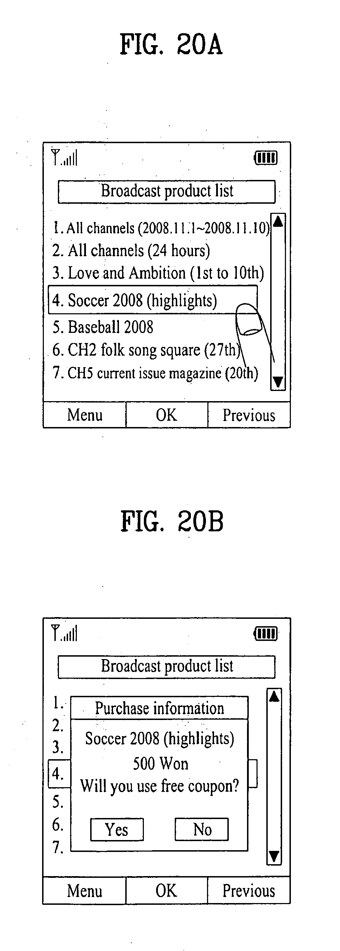

Therefore, if the 'soccer 2008 (highlights)' is selected from a broadcast product list (FIG. 20A), the mobile terminal 100 displays a purchase window for the 'soccer 2008 (highlights)' and also enables the user to select whether to use the downloaded free coupon via the purchase window (FIG. 20B). In addition, if a discount coupon for a specific broadcast product is provided via a webpage, the mobile terminal 100 acquires a discount authority for the specific broadcast product in a manner of downloading the provided discount coupon.

Referring again back now to FIG. 5, the mobile terminal 100 receives a request for a purchase of the selected broadcast product via the purchase window displayed in the displaying step S520 (S530). For instance, if a purchase region ('purchase') provided to a prescribed portion of the purchase window is activated according to a user operation input via the user input unit 130, the mobile terminal 100 determines that the purchase of the selected broadcast product has been requested by the user.

The mobile terminal 100 then writes a message (hereinafter named 'purchase request message') containing purchase relevant information on the selected broadcast product under the control of the controller 180 (S540). In this instance, the purchase relevant information is the information required for making a request for the purchase of the selected broadcast product and may include identification information of a broadcast service provider providing the selected broadcast product, identification information of an area where the mobile terminal 100 is located for the purchase request for the selected broadcast product, identification information of the selected broadcast product and/or the like. Moreover, in order to prepare for a situation that a broadcast service provider or a broadcast channel/broadcast program configuration differs per area, area identification information is preferably contained in the purchase request message.

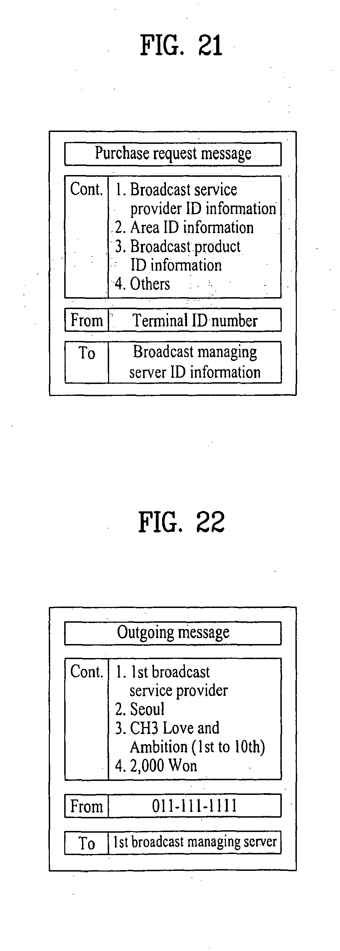

For instance, referring to FIG. 21, when a first broadcast product is selected, identification information (e.g., name, identity code, etc.) of a broadcast service provider providing the first broadcast product, area identification information (e.g., name, identity code, etc.) of an area where the mobile terminal 100 is located for the purchase request for the first broadcast product, identification information (e.g., name, identity code, etc.) of the first broadcast product and/or the like can be contained in the purchase request message. Moreover, originator information of the purchase request message and recipient information of the purchase request message can include identification information (e.g., identification number) of the mobile terminal 100 and identification information (e.g., identification number) of a broadcast managing server for managing/storing the first broadcast product, respectively.

Also, as mentioned in the above description, if a broadcast viewing authority expires within a broadcast time of a currently output broadcast program, the mobile terminal 100 includes period information from an expiration timing point of the broadcast viewing authority to an expiration timing point of the broadcast program as the purchase relevant information of the written message. In addition, if the free purchase authority or discount authority for the broadcast product requested to be purchased is acquired from the external server, the mobile terminal 100 includes information on the acquired authority as the purchase relevant information of the written message.

In the writing step S540, the mobile terminal 100 writes a purchase request message in a format suitable for a messaging service. For instance, the messaging service can include at least one of a short message service (SMS), an enhanced messaging service (EMS) and a multimedia messaging service (MMS). In addition, to make a request for a purchase of the selected broadcast product, the mobile terminal 100 transmits the message (hereinafter named 'purchase request message) written in the writing step S540 to the broadcast managing server via the wireless communication unit 110 using the messaging service, under the control of the controller 180 (S550).

Further, the broadcast managing server is the server for managing and storing a broadcast program provided via a broadcast channel including a broadcast product or a broadcast program including a broadcast product. The broadcast managing server can also be operated per broadcast service provider or can be operated in a manner of being integrated by a plurality of broadcast service providers. A user is also able to check the purchase request message transmitted (or originated) in the transmitting step S550. This can be performed if a menu item corresponding to an outgoing message management is selected by entering a message mode or a menu item corresponding to a broadcast product management is selected by entering a broadcast mode.

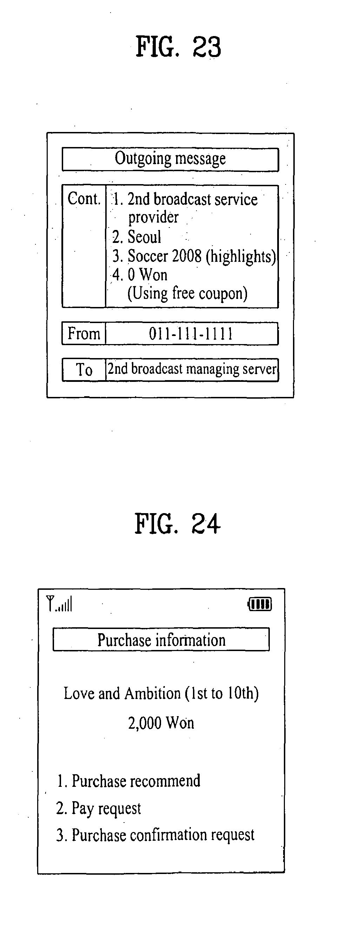

For instance, FIGs. 22 and 23 show screen configurations of a purchase request message for a broadcast product. As mentioned in the description with reference to FIG. 21, in the purchase request message, a broadcast service provider name (e.g., a first broadcast service provider, a second broadcast service provider, etc.), a broadcast product purchase area name (e.g., Seoul), a broadcast product name {e.g., CH3 Love and Ambition (episodes 1 to 10) or Soccer 2008 (highlights)}, amount information {e.g., 2,000 Won, 0 Won (free coupon used), etc.} and the like can be included.

The mobile terminal 100 then writes a message (hereinafter named 'additional message') containing at least one information selected from at least one of a purchase recommendation, payment request and purchase confirmation request for a purchase-requested broadcast product and is then able to transmit the written additional message to another terminal via the wireless communication unit 110, and more particularly, via the mobile communication module 112, under the control of the controller 180.

This will now be explained in more detail with reference to FIGs. 24 - 29. First, the mobile terminal 100 selects at least one from a purchase recommendation, payment request and purchase confirmation request for a purchase-requested broadcast product 'Love and Ambition (episodes 1 to 10)' according to a user's selection operation (FIG. 24).

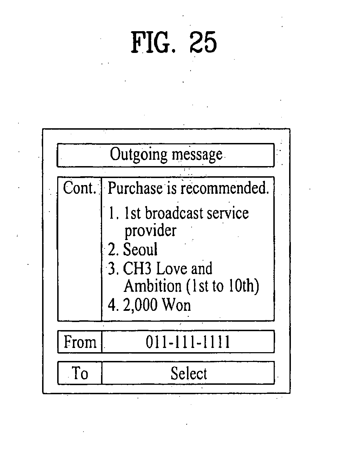

If 'purchase recommendation' is selected in FIG. 24, the mobile terminal 100 writes an additional message, which contains a text indicating that a purchase of 'Love and Ambition (episodes 1 to 10)' is recommended, with purchase relevant information (e.g., broadcast service provider identification information, area identification information, broadcast product or amount information, etc.) (FIG. 25) and is then able to transmit the written additional message to a different terminal.

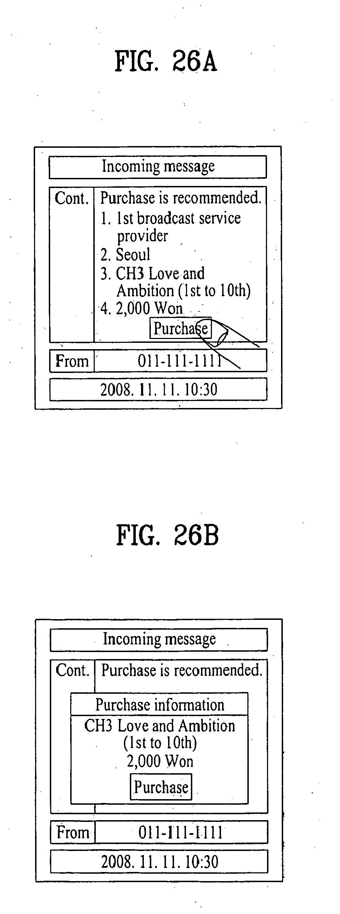

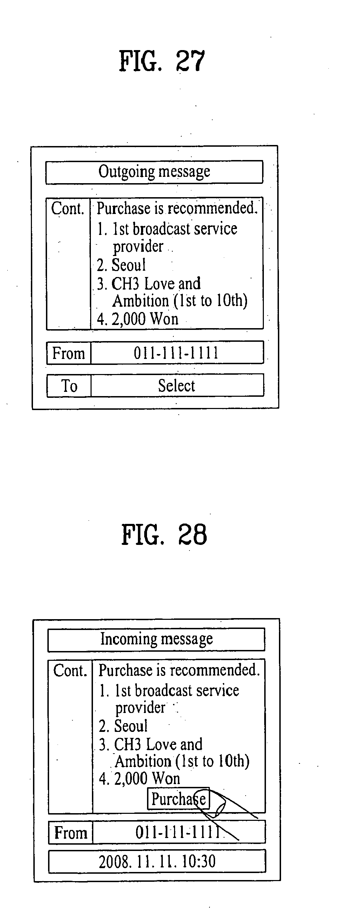

In addition, the different terminal receives and displays the additional message. If a purchase region ('purchase') is selected by a user of the different terminal (FIG. 26A), the different terminal displays a purchase window for 'Love and Ambition (episodes 1 to 10)' (FIG. 26B). Alternatively, if 'payment request' is selected in FIG. 24, the mobile terminal 100 writes an additional message, which contains a text indicating that a payment according to the purchase of 'Love and Ambition (episodes 1 to 10)' is requested, with purchase relevant information (FIG. 27) and is then able to transmit the written additional message to the different terminal.

The different terminal receives and displays the additional message. If a payment region ('pay') is selected by a user of the different terminal (FIG. 28), the different terminal pays the purchase amount of 'Love and Ambition (episodes 1 to 10)'. This means that the purchase amount of 'Love and Ambition (episodes 1 to 10)' is paid by the different terminal and also means that a broadcast viewing authority for 'Love and Ambition (episodes 1 to 10)' is acquired by the mobile terminal 100.

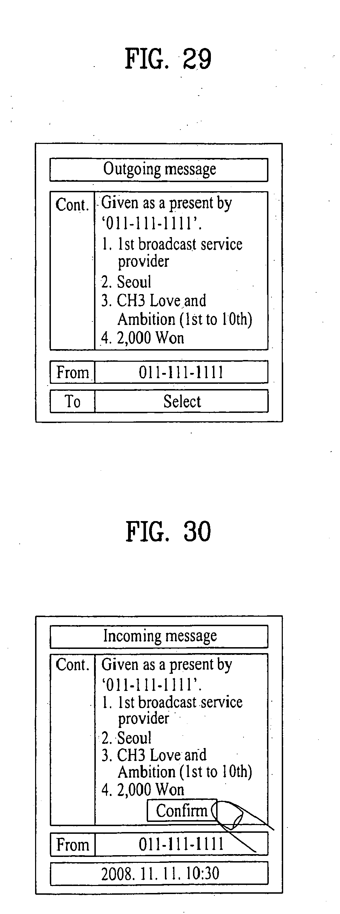

Alternatively, if 'purchase confirmation request' is selected in FIG. 24, the mobile terminal 100 writes an additional message, which contains a text indicating that Love and Ambition (episodes 1 to 10)' is given as a present to the different terminal, with purchase relevant information (FIG. 29) and is then able to transmit the written additional message to the different terminal.

The different terminal also receives and displays the additional message. If a purchase confirmation region ('purchase confirmation') is selected by a user of the different terminal (FIG. 30), the different terminal acquires a broadcast viewing authority for 'Love and Ambition (episodes 1 to 10)'. This means that the purchase amount of 'Love and Ambition (episodes 1 to 10)' is paid by the mobile terminal 100 and also means that the broadcast viewing authority for 'Love and Ambition (episodes 1 to 10)' is acquired by the different terminal.

Optionally, if 'purchase confirmation request' is selected, the mobile terminal 100 just pays a predetermined amount for an unspecific broadcast product without specifying a broadcast product separately and enables the different terminal to specify a broadcast product within the paid predetermined amount. Optionally, when the different terminal pays the purchase amount or selects the purchase confirmation (cf. FIG. 30), the mobile terminal 100 receives a message, which announces the purchase amount settlement or the purchase confirmation selection, from the different terminal. Referring again to FIG. 5, the mobile terminal 100 receives a message (hereinafter named 'purchase completion announcement message') indicating a purchase completion of the selected broadcast product from the broadcast managing serve via the wireless communication unit 110 under the control of the controller 180 (S560).

In the receiving step S560, the mobile terminal 100 receives the purchase completion announcement message via the Internet or mobile communication network, for example. For instance, the mobile terminal 100 receives the purchase completion announcement message using the wireless Internet module 113 via the Internet (WAP or HTTP used). Alternatively, the mobile terminal 100 receives the purchase completion announcement message using the mobile communication module 112 via the mobile communication network (messaging service used).

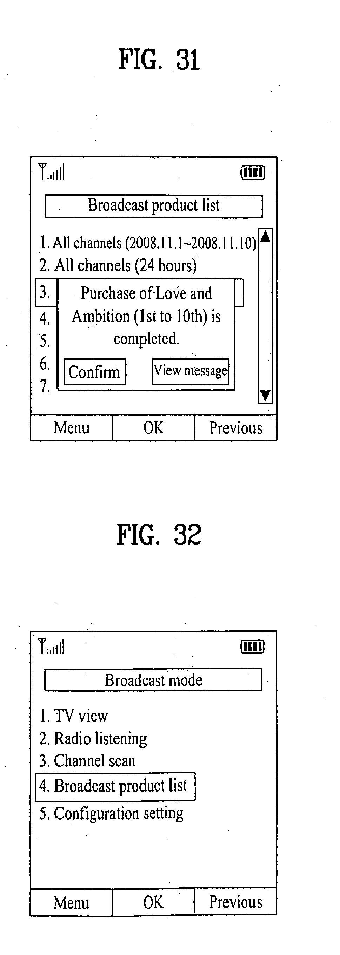

Also, when a user operation is input or a reception is received, the purchase completion announcement message is displayed via the display 151. For instance, referring to FIG. 31, when receiving the purchase completion announcement message, the mobile terminal 100 displays a window (hereinafter named 'announcement window') containing a text that announces identification information of a purchased broadcast product (e.g., a name, a name of a broadcast program or channel configuring the broadcast product, etc.) and the purchase completion.

If 'confirmation region' shown in FIG. 31 is activated, the mobile terminal 100 stops displaying the announcement window. If 'message view region' shown in FIG. 31 is selected, the mobile terminal 100 displays a content of the purchase completion announcement message. For instance, when the purchase of the first broadcast product has been completed, the content of the purchase completion announcement message can contain a name of a broadcast service provider providing a first broadcast product, name and configuration information of the first broadcast product, viewable area information, amount information, information of a broadcast viewing authority acquired according to the first broadcast product purchase (e.g., expiratory period of the broadcast viewing authority, etc.) and the like.

The mobile terminal 100 according to embodiments of the present invention displays a broadcast product list containing at least one broadcast product, of which purchase is requested by itself, via the display 151. In this instance, the broadcast product list can be displayed in a manner that a purchase status (e.g., purchase complete, purchase incomplete, purchase reservation, etc.) of the purchase-requested broadcast product is distinctively displayed.

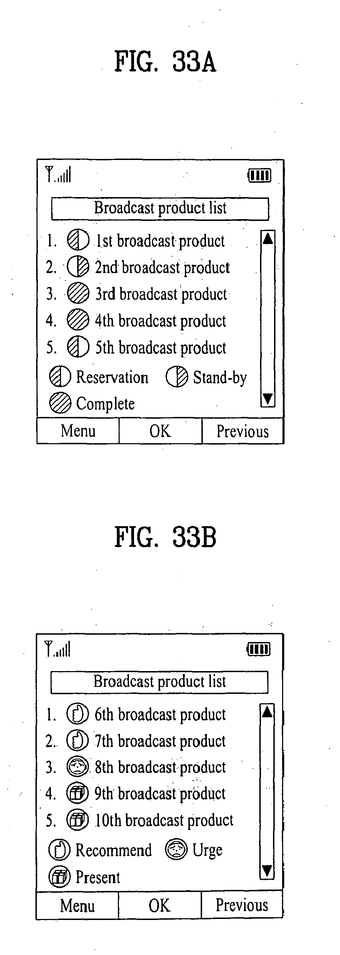

For instance, if a menu item 'broadcast product list' is selected through a menu search in FIG. 32, the mobile terminal 100 distinctively displays a purchase-incomplete broadcast product (purchase completion announcement message not received), a purchase-completed broadcast product (purchase completion announcement message received) and a purchase-reserved broadcast product and the like (FIG. 33A). In this instance, 'purchase incomplete', 'purchase completed' and 'purchase reservation' can be distinctively displayed using icons 'standby', 'completed' and 'yes', respectively. Alternatively, the broadcast product list can be displayed in a manner that a purchase recommendation, a payment request, a purchase confirmation request and the like are distinguished from each other in association with the aforesaid additional message received from a correspondent party.

For instance, if a menu item 'broadcast product list' is selected via a menu search in FIG. 32, the mobile terminal 100 distinctively displays a purchase-recommended broadcast product, a pay-requested broadcast product, a purchase confirmation requested broadcast product and the like via the display 151 (FIG. 33B). In this instance, the purchase recommendation, the pay request and the purchase confirmation request can be distinctively displayed using icons 'recommend', 'urge' and 'present', respectively.

Also, in FIGs. 33A and 33B, in order to distinctively display a broadcast product on a broadcast product list, an icon, shading, text color, background color, pattern and/or the like can be used. Moreover, in order to perform the above-described broadcast product purchasing process, the mobile terminal 100 according to an embodiment of the present invention may need a process for receiving authentication information from a user. In this instance, the authentication information means the information for authenticating an authority for a broadcast product purchase using the mobile terminal 100.

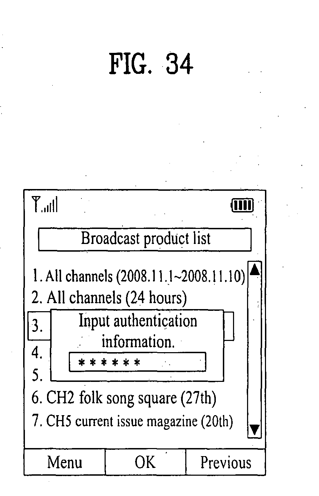

Therefore, if the authentication information is not input to the mobile terminal 100, the user may be unable to purchase a broadcast product using the mobile terminal 100. FIG. 34 shows a screen configuration for a user to input authentication information according to the present invention.

According to one embodiment of the present invention, the above-described broadcast product purchasing method can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). The computer can also include the controller 180 of the mobile terminal.

Accordingly, the present invention provides the several advantages. For example, the present invention transmits a purchase request message for a broadcast product using a messaging service, thereby facilitating a broadcast product to be purchased within a mobile communication network available area. This is particularly beneficial especially when the terminal is located in an area where a Wireless Application Protocol (WAP) or a Hyper Text Transfer Protocol (HTTP) is not available.

In addition, the controller 180 extracts broadcast product subscription information about the selected broadcast product from the broadcast content information, extracts user-specific personal purchase information for purchasing the broadcast product from the user-specific personal information stored in the memory unit of the mobile terminal, creates a message including the extracted broadcast product subscription information and the extracted user-specific personal information, and controls the wireless communication unit 110 to transmit the created message using a messaging service to a server so as to make a request for a purchase of the selected broadcast product.

Further, the broadcast product subscription information about the selected broadcast product includes at least one of a program id of the selected broadcast product, a program time of the selected broadcast product, a channel number of the selected broadcast product, and a package id identifying a package of broadcast products corresponding to the selected broadcast product. Also, the user-specific personal purchase information includes at least one of a user-id, a ESN (electronic serial number) uniquely identifying the mobile terminal, a mobile phone number, credit purchase information for crediting a purchase of the broadcast product, and age information of a user of the mobile terminal, etc.

Thus, the broadcast product can be automatically purchased without the user having to manually enter a variety of different information for purchasing the product. This is particularly advantageous on small broadcast terminals where it is sometimes difficult to enter information because of the small-sized display.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal comprising:
a wireless communication unit configured to receive broadcast content information;
a display unit configured to display the received broadcast content information;
an input unit configured to generate a selection signal indicating a selection of a broadcast product included in the displayed broadcast content information;
a memory unit configured to store user-specific personal information; and
a controller configured to extract broadcast product subscription information about the selected broadcast product from the broadcast content information, to extract user-specific personal purchase information for purchasing the broadcast product from the user-specific personal information stored in the memory unit of the mobile terminal, to create a message including the extracted broadcast product subscription information and the extracted user-specific personal information, and to control the wireless communication unit to transmit the created message using a messaging service to a server so as to make a request for a purchase of the selected broadcast product.

2. The mobile terminal of claim 1, wherein the broadcast content information includes at least one of an electronic program guide (EPG), an electronic service guide (ESG), a program guide and a service guide.

3. The mobile terminal of any of claims 1 and 2, wherein the broadcast product subscription information about the selected broadcast product includes at least one of a program id of the selected broadcast product, a program time of the selected broadcast product, a channel number of the selected broadcast product, and a package id identifying a package of broadcast products corresponding to the selected broadcast product.

4. The mobile terminal of any of claims 1-3, wherein the user-specific personal purchase information includes at least one of a user-id, an ESN (electronic serial number), a mobile phone number, credit purchase information for crediting a purchase of the broadcast product, and age information of a user of the mobile terminal.

5. The mobile terminal of any of claims 1-4, wherein the user-specific personal purchase information is stored in a subscriber identification module (SIM) detachably coupled to the mobile terminal

6. The mobile terminal of any of claims 1-5, wherein the broadcast product subscription information includes at least one of broadcast service provider identification information, purchase area identification information and broadcast product identification information for identifying the broadcast product.

7. The mobile terminal of any of claims 1-6, wherein the messaging service includes at least of a short message service (SMS), an enhanced messaging service (EMS) and a multimedia messaging service (MMS).

8. The mobile terminal of any of claims 1-7, wherein the controller is further configured to control the display unit to distinctively display a broadcast channel associated with the broadcast product or a broadcast program associated with the broadcast product.

9. The mobile terminal of any of claims 1-8, wherein the controller controls the display unit to display a purchase request confirmation prompt requesting confirmation the broadcast program is to be purchased a predetermined amount of time before the broadcast product is scheduled to start and before the wireless communication unit transmits the created message to the server.

10. The mobile terminal of any of claims 1-9, wherein the wireless communication unit is further configured to acquire coupon information including at least one of a free purchase authority for the broadcast product and a discount authority for the broadcast product from the server, and
wherein the controller is further configured to include the coupon information with the broadcast product subscription information when transmitting the message to the server.

11. The mobile terminal of any of claims 1-10, wherein the controller is further configured to create an additional message including at least one of a purchase recommendation, pay request and purchase confirmation request for the selected broadcast product, and to control the wireless communication unit to transmit the created additional message to at least one other terminal.

12. The mobile terminal of any of claims 1-11, wherein the wireless communication unit is further configured to receive a message announcing a purchase completion of the broadcast product from the server.

13. A method of controlling a mobile terminal, the method comprising:
receiving broadcast content information;
displaying the received broadcast content information;
receiving a selection signal indicating a selection of a broadcast product included in the displayed broadcast content information;
storing user-specific personal information;
extracting broadcast product subscription information about the selected broadcast product from the broadcast content information;
extracting user-specific personal purchase information for purchasing the broadcast product from the user-specific personal information stored in the memory unit of the mobile terminal;
creating a message including the extracted broadcast product subscription information and the extracted user-specific personal information; and
transmitting the created message using a messaging service to a server so as to make a request for a purchase of the selected broadcast product.

14. The method of claim 13, wherein the broadcast product subscription information about the selected broadcast product includes at least one of a program id of the selected broadcast product, a program time of the selected broadcast product, a channel number of the selected broadcast product, and a package id identifying a package of broadcast products corresponding to the selected broadcast product, or the broadcast product subscription information includes at least one of broadcast service provider identification information, purchase area identification information and broadcast product identification information for identifying the broadcast product.

15. The method of any of claims 13 and 14, wherein the user-specific personal purchase information includes at least one of a user-id, an ESN (electronic serial number), a mobile phone number, credit purchase information for crediting a purchase of the broadcast product, and age information of a user of the mobile terminal.
